# EUROPEAN PATENT APPLICATION

(11) **EP 4 822 944 A1**
(43) Date of publication of application: **14.10.2026**
(21) Application number: 26169056.4
(22) Date of filing: 30.03.2026
(51) Int. Cl.: H02J 9/06, H02B 1/30, H02J 7/34

(54) **ENHANCED ENERGY STORAGE CONTROL CABINET**

(30) Priority: 08.04.2025 US 202519173608
(71) Applicant: GE Vernova Technology GmbH, 5400 Baden (CH)
(72) Inventor: JEZIERSKI, Chester, 12309 Schenectady, New York (US); KATHIRESAN, Valliappan, 600032 Chennai, TN (IN)
(74) Representative: Rüger Abel IP Legal Solutions GmbH

(57) **Abstract**

Devices, systems, and methods for energy storage control cabinets supplying power to electrical devices may include an energy storage control cabinet with an uninterruptible power supply (UPS) including a battery backup and that receives a power supplied to the energy storage control cabinet; and one or more electrical control components powered by current from the UPS, each using two or fewer power conversions in the energy storage control cabinet of the power supplied to the energy storage control cabinet.

## Description

### TECHNICAL FIELD

This disclosure generally relates to energy storage cabinets, and more specifically to an energy storage control cabinet with fewer than three power conversions per powered component.

### BACKGROUND

Electrical control cabinets, such as for battery energy storage systems, are used in a variety of locations and applications and use several electrical conversion stages that consume electrical power. The electrical power conversions of control cabinets reduce efficiency and reliability of electrical control cabinets.

### SUMMARY

An energy storage control cabinet supplying power to electrical devices may include: an uninterruptible power supply (UPS) comprising a battery backup and configured to receive a power supplied to the energy storage control cabinet; and one or more electrical control components powered by current from the UPS, each using two or fewer power conversions in the energy storage control cabinet of the power supplied to the energy storage control cabinet.

An electrical control cabinet supplying power to electrical devices may include: an uninterruptible power supply (UPS) configured to receive an alternating current (AC) power supplied to the electrical control cabinet; and one or more electrical control components powered by current from the UPS, each using two or fewer power conversions in the electrical control cabinet of the AC power supplied to the electrical control cabinet.

An electrical control cabinet supplying power to electrical devices may include: an uninterruptible power supply (UPS) configured to receive a direct current (DC) power supplied to the electrical control cabinet; and one or more electrical control components powered by current from the UPS, each using two or fewer power conversions in the electrical control cabinet of the DC power supplied to the electrical control cabinet.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example architecture of a control cabinet that uses three power conversion stages for each powered component.
FIG. 2 illustrates an example architecture of a control cabinet in accordance with one embodiment of the present disclosure.
FIG. 3 illustrates an example architecture of a control cabinet in accordance with one embodiment of the present disclosure.
FIG. 4 illustrates an example architecture of a control cabinet in accordance with one embodiment of the present disclosure.
FIG. 5 illustrates an example architecture of a control cabinet in accordance with one embodiment of the present disclosure.
FIG. 6 illustrates an example architecture of a control cabinet in accordance with one embodiment of the present disclosure.
FIG. 7 illustrates an example architecture of a control cabinet in accordance with one embodiment of the present disclosure.

Certain implementations will now be described more fully below with reference to the accompanying drawings, in which various implementations and/or aspects are shown. However, various aspects may be implemented in many different forms and should not be construed as limited to the implementations set forth herein; rather, these implementations are provided so that this disclosure will be thorough and complete, and will fully convey the scope of the disclosure to those skilled in the art. Like numbers in the figures refer to like elements throughout. Hence, if a feature is used across several drawings, the number used to identify the feature in the drawing where the feature first appeared will be used in later drawings.

### DETAILED DESCRIPTION

Electrical control cabinets, such as those installed in control rooms, data centers, battery energy storage systems (BESS), and wind turbine sites, include multiple electrical conversion stages between the point where electrical power enters the electrical cabinet and the point where the power is consumed by active electronic parts. Each electrical conversion stage consumes electrical power that reduces control cabinet efficiency and reliability, produces heat rejected to the environment, and increases cabinet cost.

The present disclosure reduces electrical conversion stages of electrical control cabinets, thereby increasing their efficiency and reliability, and reducing heat rejection and high voltage alternating current loading and control cabinet cost. In addition, the present disclosure reduces electrical control cabinet parts, which also reduces necessary spare parts inventory. As a result of the improved efficiencies and reliability, maintenance and repair needs and cost may be reduced.

Control cabinets often are powered by alternating current (AC), which goes into an uninterruptible power supply (UPS), which converts the AC to direct current (DC) to enable connection to a backup battery. The DC is converted back to AC to power control components that include AC inputs. The AC is converted again to DC to power active electronic parts. Therefore, some control cabinets include three conversions AC to DC, DC to AC, and AC to DC.

Electronic parts operate using DC. Most control components are available with DC power inputs. In one or more embodiments, there may be only one conversion stage from AC to DC between the point where the electrical power enters the cabinet and the point where the power is consumed by the active electronic parts.

In one or more embodiments, some selected control components may require DC power at a different voltage than the DC bus. In such situations, a small DC-to-DC converter may be used to create a second DC bus to power such components at their requested voltage. In this scenario, most control components may be powered through only one conversion stage, while one or a few other components are powered through only two conversion stages (i.e., less than three conversions).

In one or more embodiments, some selected control components may not be available with DC power inputs. In such cases, a small DC-to-AC converter may be used to power them, while the majority of the control components may be powered from DC. In such scenarios, most control components may be powered through only one conversion stage while one or a few components may be powered through only two conversion stages (i.e., less than three conversions).

In one or more embodiments, a combination of the small DC-to-AC converter and the small DC-to-DC converter described above may be used. When there are both control components that require DC power at a different voltage than the DC bus, and control components that are only available with AC power inputs, then a small DC-to-DC converter and a small DC-to-AC converter may be used to power them. In such scenarios, most control components may be powered through only one conversion while two or a few components may be powered through two conversions (i.e., less than three conversions).

In one or more embodiments, DC power may be available at some installation sites. When the DC voltage is within the input voltage rage of the control components, the DC voltage may be used directly to power the control cabinet with no electrical conversion stages. If some components require a different DC voltage, a small DC-to-DC converter may be added. If some components require AC input voltage, a small DC-to-AC converter may be added. If there are components that requires DC power at a different voltage and control components that require AC input voltage, then a small DC-to-DC converter and a small DC-to-AC converter may be used to power them, respectively. Therefore, the components are powered using zero or only one conversion stage.

In one or more embodiments, if DC power is available, but is not within the input voltage rage of the control components, then a DC-to-DC converter may be used to convert the DC to the needed voltage. A small DC-to-DC converter and/or small DC-to-AC converter may be used to power components using one or two conversion stages only.

The above descriptions are for purposes of illustration and are not meant to be limiting. Numerous other examples, configurations, processes, etc., may exist, some of which are described in greater detail below. Example embodiments will now be described with reference to the accompanying figures.

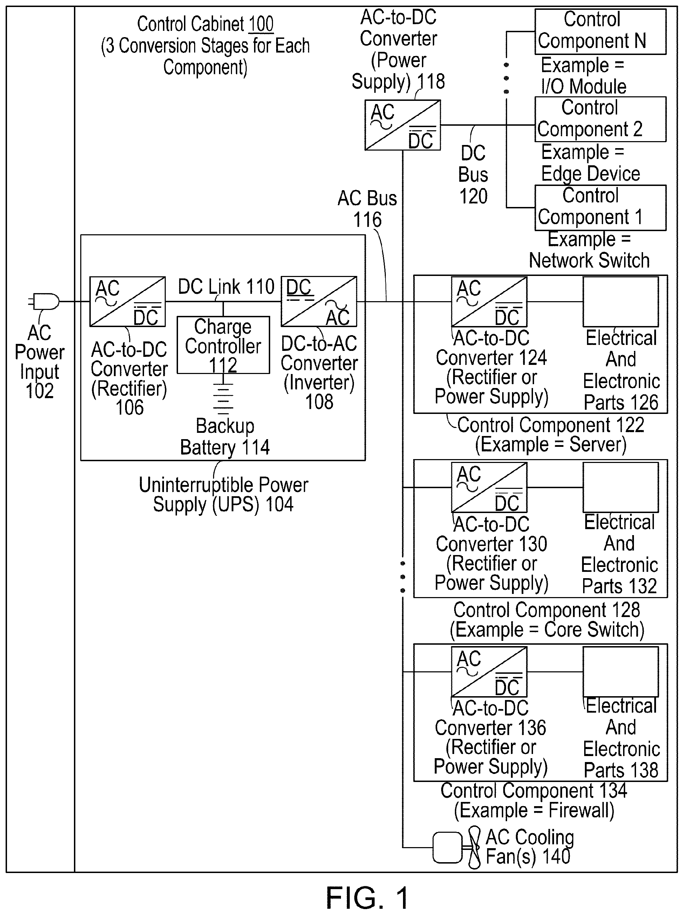

FIG. 1 illustrates an example architecture of a control cabinet 100 that uses three power conversion stages for each powered component.

Referring to FIG. 1, the control cabinet 100 may rely on three conversion stages for each component. An AC power input 102 to the control cabinet 100 may power an uninterruptible power supply (UPS) 104 of the control cabinet 100, specifically to an AC-to-DC converter 106, which connects to a DC-to-AC converter 108 (e.g., two conversion stages) via a DC link 110, which connects through a charge controller 112 to a backup battery 114. The UPS 104 provides the converted AC via an AC bus 116 to one or more electrical devices, components, and parts. The AC bus 116 may connect to an AC-to-DC converter 118 (e.g., a third conversion stage), and the DC may be provided via a DC bus 120 to control components 1-N (e.g., I/O modules, edge devices, network switches, etc.).

Still referring to FIG. 1, the AC bus 116 may connect to a control component 122, which may include an AC-to-DC converter 124 (e.g., a third conversion stage), and the DC may power electrical and electronic parts 126 of the control component 122 (e.g., a server). The AC bus 116 may connect to a control component 128, which may include an AC-to-DC converter 130 (e.g., a third conversion stage), and the DC may power electrical and electronic parts 132 of the control component 128 (e.g., a core switch). The AC bus 116 may connect to a control component 134, which may include an AC-to-DC converter 136 (e.g., a third conversion stage), and the DC may power electrical and electronic parts 138 of the control component 134 (e.g., a firewall). The AC bus 116 may power AC components such as AC cooling fans 140.

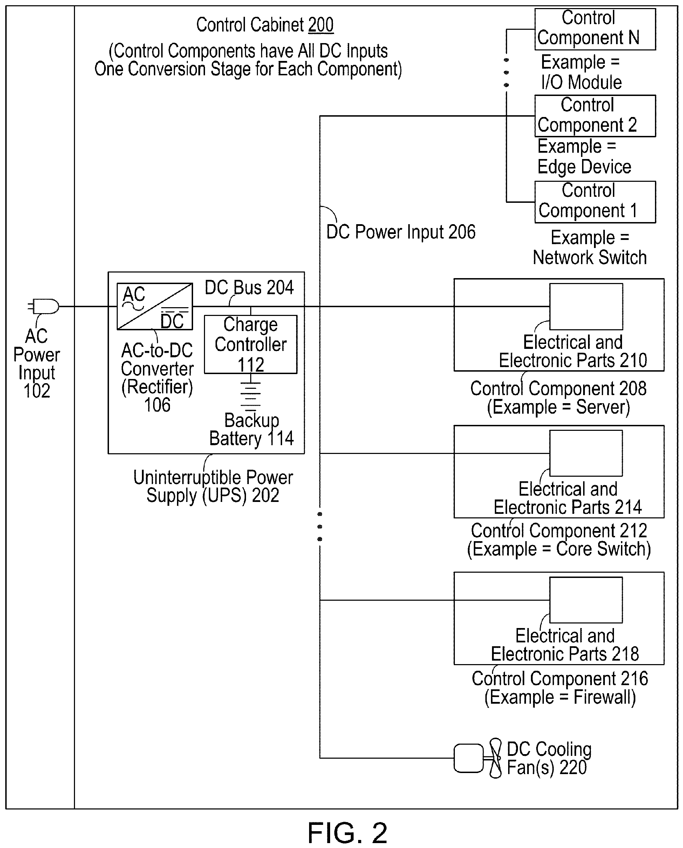

FIG. 2 illustrates an example architecture of a control cabinet 200 in accordance with one embodiment of the present disclosure.

Referring to FIG. 2, the control cabinet 200 may power control components all with DC inputs, and therefore may use only one conversion stage for each powered component. The AC power input 102 may supply a UPS 202, which may include the AC-to-DC converter 106, which may connect via the charge controller 112 to the backup battery 114. However, unlike the UPS 104, the UPS 202 may include the AC-to-DC converter 106 as its only power converter (e.g., one conversion stage) because the components of the control cabinet 200 may all be DC powered. A DC bus 204 of the UPS 202 may provide the converted DC as a DC power input 206 to control components of the control cabinet 200.

Still referring to FIG. 2, the DC power input 206 may supply control components 1-N (e.g., I/O modules, edge devices, network switches, etc.). The DC power input 206 also may supply a control component 208 (e.g., a server) of the control cabinet 200, including electrical and electronic parts 210. The DC power input 206 also may supply a control component 212 (e.g., a core switch) of the control cabinet 200, including electrical and electronic parts 214. The DC power input 206 also may supply a control component 216 (e.g., a firewall) of the control cabinet 200, including electrical and electronic parts 218. The DC power input 206 also may supply DC cooling fans 220 of the control cabinet 200.

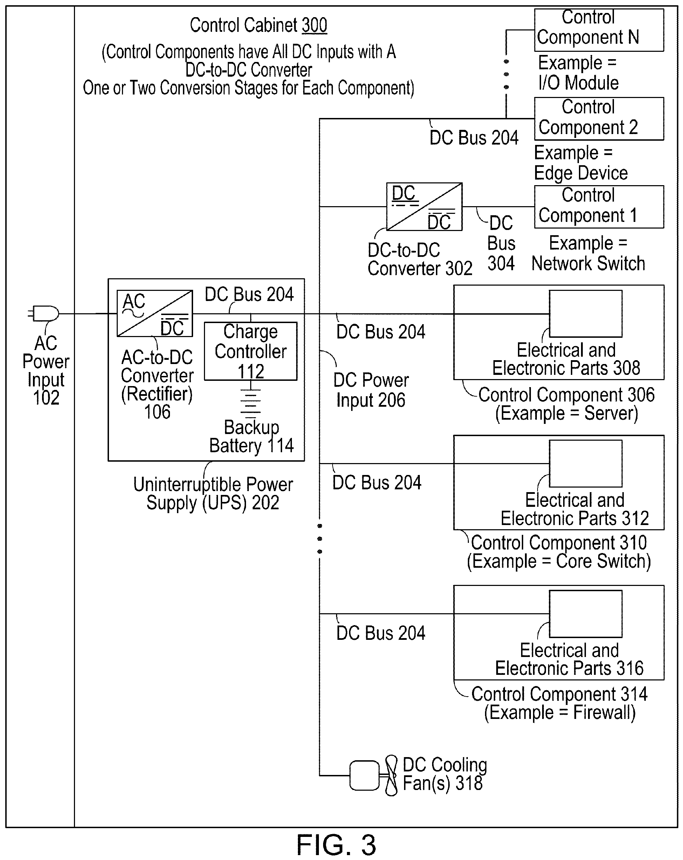

FIG. 3 illustrates an example architecture of a control cabinet 300 in accordance with one embodiment of the present disclosure.

Referring to FIG. 3, the control cabinet 300 may power control components all with DC, but some possibly requiring a DC-to-DC converter as a second conversion stage. The AC power input 102 may supply a UPS 202, which may include the AC-to-DC converter 106, which may connect via the charge controller 112 to the backup battery 114. However, unlike the UPS 104, the UPS 202 may include the AC-to-DC converter 106 as its only power converter (e.g., one conversion stage) because the components of the control cabinet 200 may all be DC powered. A DC bus 204 of the UPS 202 may provide the converted DC to control components of the control cabinet 300.

Still referring to FIG. 3, the DC power input 206 from the DC bus 204 may supply control components 1-N (e.g., I/O modules, edge devices, network switches, etc.). Some components of the control cabinet 300 may require a second conversion stage. For example, the control component 1 may require a DC-to-DC converter 302 to convert the DC from the UPS 202, and DC from the DC-to-DC converter 302 may be supplied to the control component 1 via a DC bus 304. Some components of the control cabinet 300 may only require the first conversion stage provided by the UPS 202. The DC input 206 may supply a control component 306 (e.g., a server) with electrical parts 308, a control component 310 (e.g., a core switch) with electrical parts 312, and a control component 314 (e.g., a firewall) with electrical parts 316. DC cooling fans 318 of the control cabinet 300 may be powered by either the DC input 206 or the DC bus 304 (e.g., one or two stages of power conversion).

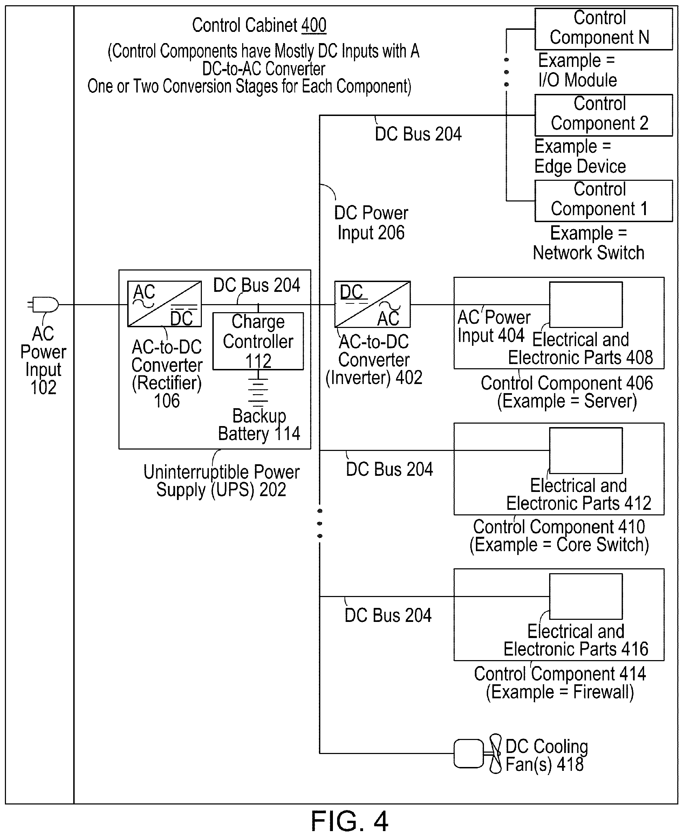

FIG. 4 illustrates an example architecture of a control cabinet 400 in accordance with one embodiment of the present disclosure.

Referring to FIG. 4, the control cabinet 400 may power control components using DC and control components using AC, so one or two conversion stages may be required for each component. The AC power input 102 may supply a UPS 202, which may include the AC-to-DC converter 106, which may connect via the charge controller 112 to the backup battery 114. However, unlike the UPS 104, the UPS 202 may include the AC-to-DC converter 106 as its only power converter (e.g., one conversion stage) because some of the components of the control cabinet 200 may be DC powered.

Still referring to FIG. 4, the DC power input 206 from the DC bus 204 may supply control components 1-N (e.g., I/O modules, edge devices, network switches, etc.). Some components of the control cabinet 400 may use AC. For example, an AC-to-DC converter 402 (e.g., a second conversion stage) may convert the DC power input 206 to an AC power input 404 to a control component 406 (e.g., a server) with electrical parts 408. Other components of the control cabinet 400 may use the DC power input 206. A control component 410 (e.g., a core switch) may include electrical parts 412 powered by the DC power input 206. A control component 414 (e.g., a firewall) may include electrical parts 416 powered by the DC power input 206. DC cooling fans 418 of the control cabinet 400 may be powered by the DC power input 206.

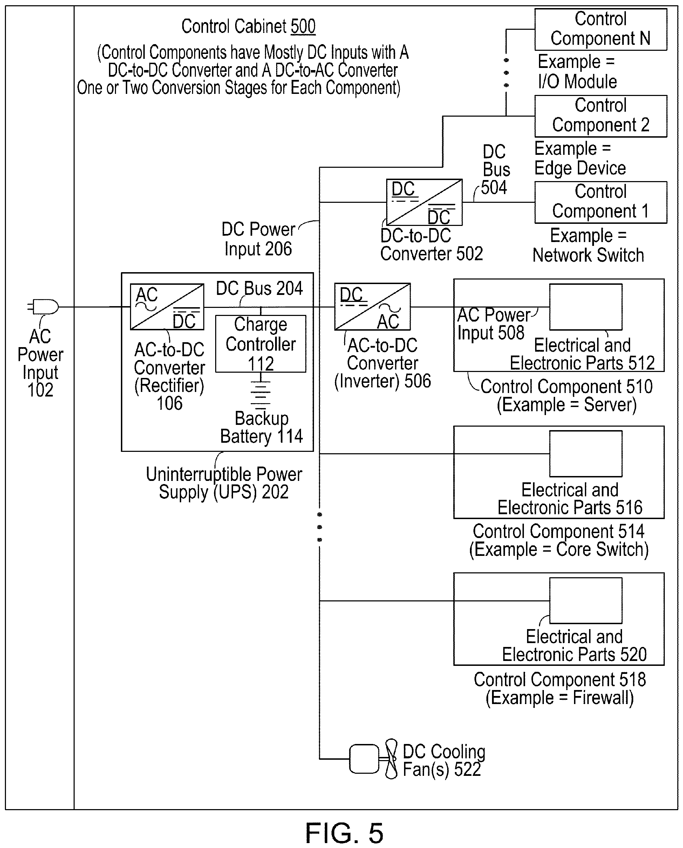

FIG. 5 illustrates an example architecture of a control cabinet 500 in accordance with one embodiment of the present disclosure.

Referring to FIG. 5, the control cabinet 500 may power control components using DC and control components using AC, and some of the DC-powered components may require an additional DC conversion. Therefore, the components of the control cabinet 500 may require one conversion stage and/or two conversion stages. The AC power input 102 may supply a UPS 202, which may include the AC-to-DC converter 106, which may connect via the charge controller 112 to the backup battery 114. However, unlike the UPS 104, the UPS 202 may include the AC-to-DC converter 106 as its only power converter (e.g., one conversion stage) because some of the components of the control cabinet 200 may be DC powered with the DC power input 206.

Still referring to FIG. 5, the DC power input 206 from the DC bus 204 may supply control components 1-N (e.g., I/O modules, edge devices, network switches, etc.). Some components of the control cabinet 500 may require a second conversion stage. For example, the control component 1 may require a DC-to-DC converter 502 (e.g., which may be the same as the DC-to-DC converter 302 of FIG. 3) to convert the DC from the UPS 202, and DC from the DC-to-DC converter 502 may be supplied to the control component 1 via a DC bus 504. Some components of the control cabinet 500 may require AC, and may use a DC-to-AC converter 506 (e.g., which may be the same as the DC-to-AC converter 402 in FIG. 4) to convert to an AC power input 508 to supply a control component 510 (e.g., a server) with electrical parts 512. Other components of the control cabinet 500 may be powered by the DC power input 206 (e.g., only one conversion stage). For example, a control component 514 (e.g., a core switch) with electrical parts 516, and a control component 518 (e.g., a firewall) with electrical parts 520 may be powered via the DC power input 206 without requiring a second conversion stage. DC cooling fans 522 of the control cabinet 500 may be powered via the DC power input 206 (e.g., one conversion stage) or via the DC bus 504 (e.g., two conversion stages).

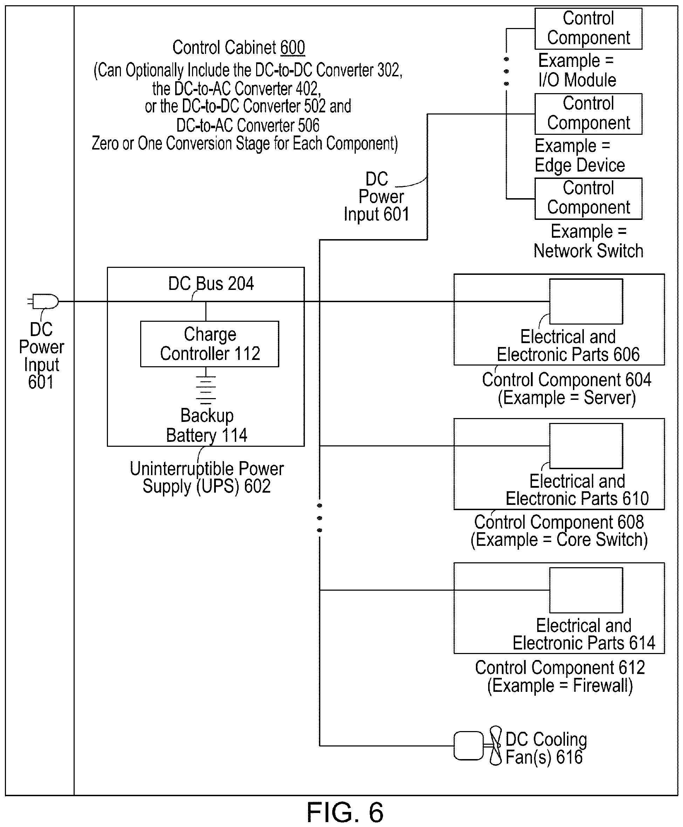

FIG. 6 illustrates an example architecture of a control cabinet 600 in accordance with one embodiment of the present disclosure.

Referring to FIG. 6, the control cabinet 600 may power control components all with DC inputs using zero conversion stages. Some of the DC-powered components may require a DC-to-DC conversion stage (e.g., optionally using the DC-to-DC converter 302) or there may be some AC-powered components that may require a DC-to-AC conversion stage (e.g., optionally using the DC-to-AC converter 402), or there may be some DC-powered components that require a DC-to-DC conversion stage, and there may be some AC-powered components that require a DC-to-AC conversion stage (e.g., optionally using the DC-to-DC converter 502 and the DC-to-AC converter 506). Therefore, the components of the control cabinet 600 may require zero conversion stages and/or one conversion stage for each component. In FIG. 6, the control cabinet 600 may receive a DC power input 601, and the DC bus 204 may connect via the charge controller 112 to the battery backup 114 without any conversion stages. The DC power input 601 may supply any control components 1-N (e.g., I/O modules, edge devices, network switches, etc.), and DC cooling fans 616, either directly or via the DC-to-DC converter 302 as shown in FIG. 3. The DC power input 601 may supply a control component 604 (e.g., a server) with electrical parts 606, a control component 608 (e.g., a core switch) with electrical parts 610, a control component 612 (e.g., a firewall) with electrical components 614, either directly or via the DC-to-AC converter 402 as shown in FIG. 4. The DC power input 601 may supply control components 1-N, DC cooling fans 616, and control components 604, 608 and 612, either directly or via the DC-to-DC converter 502 and the DC-to-AC converter 506 as shown in FIG. 5.

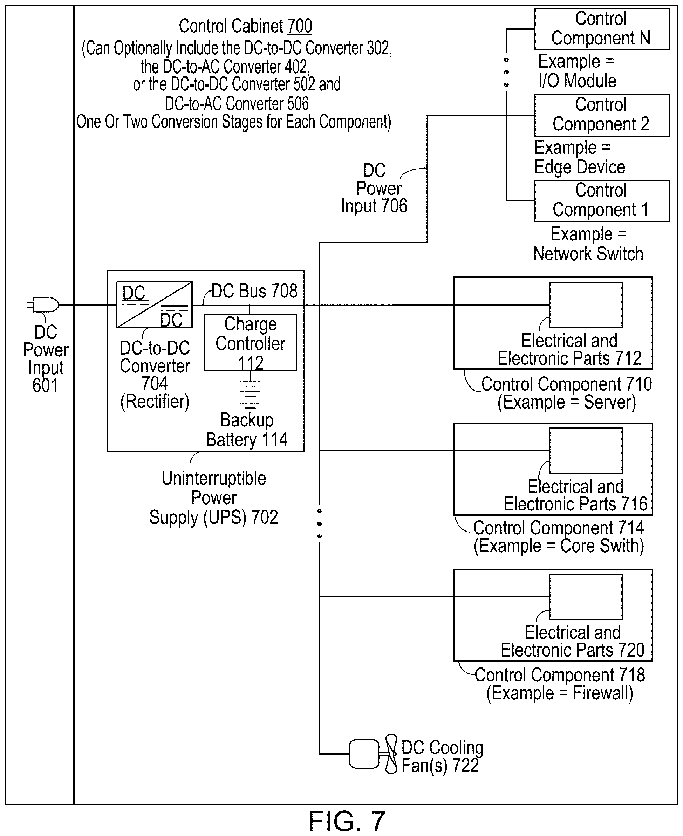

FIG. 7 illustrates an example architecture of a control cabinet 700 in accordance with one embodiment of the present disclosure.

Referring to FIG. 7, the control cabinet 700 may power control components using only one or two conversion stages (e.g., optionally using the DC-to-DC converter 302 or the DC-to-AC converter 402, or the DC-to-DC converter 502 and the DC-to-AC converter 506). In FIG. 7, the control cabinet 700 may receive the DC power input 601, and a UPS 702 may include a DC-to-DC converter 704 (e.g., first conversion stage) to convert to DC input power 706 provided from the UPS 702 via a DC bus 708, which may connect via the charge controller 112 to the battery backup 114. The DC power input 706 may supply any control components 1-N, directly or via the DC-to-DC converter 302 as shown in FIG. 3. The DC power input 706 may supply a control component 710 (e.g., a server) with electrical parts 712, a control component 714 (e.g., a core switch) with electrical parts 716, a control component 718 (e.g., a firewall) with electrical components 720, and DC cooling fans 722, either directly or using one or two conversion stages as shown in FIGs. 3-5.

The examples herein are not meant to be limiting.

The term "circuitry" at least in some examples refers to a circuit or system of multiple circuits configured to perform a particular function in an electronic device. The circuit or system of circuits may be part of, or include one or more hardware components, such as a logic circuit, a processor (shared, dedicated, or group) and/or memory (shared, dedicated, or group), an application-specific integrated circuit (ASIC), field-programmable gate array (FPGA), programmable logic controller (PLC), single-board computer (SBC), system on chip (SoC), system in package (SiP), multi-chip package (MCP), digital signal processor (DSP), and the like, that are configured to provide the described functionality. In addition, the term "circuitry" may also refer to a combination of one or more hardware elements with the program code used to carry out the functionality of that program code. Some types of circuitry may execute one or more software or firmware programs to provide at least some of the described functionality. Such a combination of hardware elements and program code may be referred to as a particular type of circuitry.

The term "processor circuitry" at least in some examples refers to, is part of, or includes circuitry capable of sequentially and automatically carrying out a sequence of arithmetic or logical operations, or recording, storing, and/or transferring digital data. The term "processor circuitry" at least in some examples refers to one or more application processors, one or more baseband processors, a physical CPU, a single-core processor, a dual-core processor, a triple-core processor, a quad-core processor, and/or any other device capable of executing or otherwise operating computer-executable instructions, such as program code, software modules, and/or functional processes. The terms "application circuitry" and/or "baseband circuitry" may be considered synonymous to, and may be referred to as, "processor circuitry."

The term "memory" and/or "memory circuitry" at least in some examples refers to one or more hardware devices for storing data, including random access memory (RAM), static RAM (SRAM), dynamic RAM (DRAM), synchronous DRAM (SDRAM), magnetoresistive RAM (MRAM), conductive bridge Random Access Memory (CB-RAM), spin transfer torque (STT)-MRAM, phase change RAM (PRAM), core memory, read-only memory (ROM), programmable ROM (PROM), erasable PROM (EPROM), electrically EPROM (EEPROM), flash memory, non-volatile RAM (NVRAM), magnetic disk storage mediums, optical storage mediums, flash memory devices or other machine readable mediums for storing data. The term "computer-readable medium" includes, but is not limited to, memory, portable or fixed storage devices, optical storage devices, and various other mediums capable of storing, containing or carrying instructions or data.

The term "interface circuitry" at least in some examples refers to, is part of, or includes circuitry that enables the exchange of information between two or more components or devices. The term "interface circuitry" at least in some examples refers to one or more hardware interfaces, for example, buses, I/O interfaces, peripheral component interfaces, network interface cards, and/or the like.

The term "computer system" at least in some examples refers to any type interconnected electronic devices, computer devices, or components thereof. Additionally, the terms "computer system" and/or "system" at least in some examples refer to various components of a computer that are communicatively coupled with one another. Furthermore, the term "computer system" and/or "system" at least in some examples refer to multiple computer devices and/or multiple computing systems that are communicatively coupled with one another and configured to share computing and/or networking resources.

The term "server" at least in some examples refers to a computing device or system, including processing hardware and/or process space(s), an associated storage medium such as a memory device or database, and, in some instances, suitable application(s) as is known in the art. The terms "server system" and "server" may be used interchangeably herein, and these terms at least in some examples refers to one or more computing system(s) that provide access to a pool of physical and/or virtual resources. The various servers discussed herein include computer devices with rack computing architecture component(s), tower computing architecture component(s), blade computing architecture component(s), and/or the like. The servers may represent a cluster of servers, a server farm, a cloud computing service, or other grouping or pool of servers, which may be located in one or more datacenters. The servers may also be connected to, or otherwise associated with, one or more data storage devices (not shown). Moreover, the servers includes an operating system (OS) that provides executable program instructions for the general administration and operation of the individual server computer devices, and includes a computer-readable medium storing instructions that, when executed by a processor of the servers, may allow the servers to perform their intended functions. Suitable implementations for the OS and general functionality of servers are known or commercially available, and are readily implemented by persons having ordinary skill in the art.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure.

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

## Claims

1. An electrical control cabinet supplying power to electrical devices, the electrical control cabinet comprising:
an uninterruptible power supply (UPS) configured to receive an alternating current (AC) power supplied to the electrical control cabinet; and
one or more electrical control components powered by current from the UPS, each using two or fewer power conversions in the electrical control cabinet of the AC power supplied to the electrical control cabinet.

2. The electrical control cabinet of claim 1, wherein the UPS comprises only one power conversion in the electrical control cabinet of the power supplied to the electrical control cabinet, and wherein the only one power conversion is via an AC-to-DC (direct current) converter of the UPS.

3. The electrical control cabinet of claim 2, wherein each of the one or more electrical control components use the only one power conversion as their only power conversion in the electrical control cabinet of the power supplied to the electrical control cabinet.

4. The electrical control cabinet of claim 2, wherein at least one of the one or more electrical control components uses only two power conversions in the electrical control cabinet of the power supplied to the electrical control cabinet, the only two power conversions comprising a DC-to-DC converter or a DC-to-AC converter.

5. The electrical control cabinet of claim 2, wherein a first of the one or more electrical control components uses only two power conversions in the electrical control cabinet of the power supplied to the electrical control cabinet, the only two power conversions for the first of the one or more electrical control components comprising a DC-to-DC converter, and wherein a second of the one or more electrical control components uses only two power conversions in the electrical control cabinet of the power supplied to the electrical control cabinet, the only two power conversions for the second of the one or more electrical control components comprising a DC-to-AC converter.

6. An electrical control cabinet supplying power to electrical devices, the electrical control cabinet comprising:
an uninterruptible power supply (UPS) configured to receive a direct current (DC) power supplied to the electrical control cabinet; and
one or more electrical control components powered by current from the UPS, each using two or fewer power conversions in the electrical control cabinet of the DC power supplied to the electrical control cabinet.

7. The electrical control cabinet of claim 6, wherein the UPS comprises zero conversions in the electrical control cabinet of the power supplied to the electrical control cabinet or only one conversion in the electrical control cabinet of the power supplied to the electrical control cabinet.

8. The electrical control cabinet of claim 7, wherein the UPS comprises zero conversions in the electrical control cabinet of the power supplied to the electrical control cabinet, and wherein the one or more electrical control components use zero conversions in the electrical control cabinet of the power supplied to the electrical control cabinet.

9. The electrical control cabinet of claim 7, wherein the UPS comprises zero conversions in the electrical control cabinet of the power supplied to the electrical control cabinet, and wherein a first of the one or more electrical control components uses only one conversion in the electrical control cabinet of the power supplied to the electrical control cabinet.

10. The electrical control cabinet of claim 7, wherein the UPS comprises the only one conversion in the electrical control cabinet of the power supplied to the electrical control cabinet.

11. The electrical control cabinet of any one of the preceding claims, wherein the electrical control cabinet is an energy storage control cabinet.

12. An energy storage control cabinet comprising the electrical control cabinet of any one of the claims 1-10, wherein the uninterruptible power supply (UPS) comprises a battery backup.
